# EUROPÄISCHE PATENTSCHRIFT

(11) **EP 4 722 135 B1**
(45) Veröffentlichungstag und Bekanntmachung des Hinweises auf die Patenterteilung: **04.11.2026**
(21) Anmeldenummer: 25206433.2
(22) Anmeldetag: 02.10.2025
(51) Int. Cl.: B65G 69/18, B65B 3/00

(54) **ÜBERFÜHRUNGSANORDNUNG ZUM ASEPTISCHEN ÜBERFÜHREN EINES PHARMAZEUTISCHEN MITTELS, BETREFFENDES ÜBERFÜHRUNGSSYSTEM, VERWENDUNG UND VERFAHREN**
TRANSFER ARRANGEMENT FOR ASEPTICALLY TRANSFERRING A PHARMACEUTICAL AGENT, RELATED TRANSFER SYSTEM, USE AND METHOD
ENSEMBLE DE TRANSFERT POUR LE TRANSFERT ASEPTIQUE D'UN AGENT PHARMACEUTIQUE, SYSTÈME DE TRANSFERT ASSOCIÉ, UTILISATION ET PROCÉDÉ

(30) Priorität: 04.10.2024 DE 102024128731
(43) Veröffentlichungstag der Anmeldung: 08.04.2026
(73) Patentinhaber: Siegfried AG, 4800 Zofingen (CH)
(72) Erfinder: Köppen, Andreas, 31789 Hameln (DE)
(74) Vertreter: Eisenführ Speiser

(56) Entgegenhaltungen:
- EP-A2- 1 550 833
- EP-B1- 0 658 501
- EP-B9- 3 524 365
- DE-U1- 202005 016 035

## Beschreibung

Die Erfindung betrifft eine Überführungsanordnung zum aseptischen Überführen eines pharmazeutischen Mittels aus einem Isolator in einen Behälter, mit einem mit dem Behälter verbindbaren Kopplungselement, mit einem Durchlass und einem betätigbaren ersten Verschlussmittel, welches in einer Offenstellung einen Durchlass durch das Kopplungselement freigibt und in einer Schließstellung den Durchlass durch das Kopplungselement sperrt, und einer Trichteranordnung mit einem Verbindungsabschnitt, welcher dazu eingerichtet ist, mit dem Kopplungselement reversibel gekoppelt zu werden, wobei der Verbindungsabschnitt ein zweites Verschlussmittel aufweist, welches in einer Offenstellung einen Durchlass durch die Trichteranordnung freigibt und in einer Schließstellung einen Durchlass durch die Trichteranordnung sperrt.

Produktberührend bedeutet im Sinne der Erfindung der Kontakt eines Mittels zur Überführung oder Lagerung einer Substanz oder einem Gemisch von Substanzen mit einer Substanz oder dem Gemisch von Substanzen, die im aseptischen Prozess keimfrei bleiben sollen.

Der aseptischen Überführung von pharmazeutischen Mitteln, beispielswiese zwischen Behältern oder dergleichen, kommt in der pharmazeutischen Industrie, insbesondere bei aseptischen Prozessen, eine hohe Bedeutung zu. Ein wesentliches Ziel hierbei ist die Sicherstellung von aseptischen Bedingungen vor, während und nach dem Überführungsvorgang, um eine Kontamination der Mittel zu vermeiden. Randbedingungen, die die Herstellung und Verarbeitung derartiger Mittel betreffen, sind in sogenannten Good Manufacturing Practice (GMP)-Richtlinien definiert, wie sie beispielsweise von der Europäischen Kommission erlassen worden sind. Neben der Sicherstellung von aseptischen Bedingungen kommt aber auch dem Schutz des Bedienpersonals vor entsprechenden Substanzen eine gewichtige Rolle zu.

So sind produktberührende Teile bei der Herstellung von aseptischen Produkten zu sterilisieren. Eine Dekontamination mit z. B. H₂O₂ ist nicht als Methode nach den gängigen Regelungen (s. o.) für die Sterilisierung solcher produktberührenden Teile zugelassen. Dies erfordert eine Anordnung, in der sämtliche produktberührenden Teile austauschbar sein müssen, um diese vorzugsweise in einem Autoklaven zu sterilisieren.

Überführungsanordnungen der eingangs genannten Art sind aus dem Stand der Technik bekannt und werden dazu verwendet, Mittel, wie pharmazeutische Mittel, zwischen Behältern oder dergleichen zu transferieren. Hierzu können Anordnungen verwendet werden, bei denen sowohl das Kopplungselement als auch der Verbindungsabschnitt der Trichteranordnung ein Verschlussmittel aufweisen. In einem Zustand, in dem das Kopplungselement und der Verbindungsabschnitt der Trichteranordnung nicht miteinander gekoppelt sind, können die jeweiligen Verschlussmittel in eine Schließstellung gebracht werden, sodass weder aus dem Kopplungselement noch aus der Trichteranordnung Material austreten kann, oder eine Kontamination befürchtet werden muss. Nach dem Koppeln des Kopplungselements mit dem Verbindungsabschnitt der Trichteranordnung können die Kopplungselemente geöffnet werden, sodass ein Materialtransfer durch die Überführungsanordnung ermöglicht wird. Sterile Bedingungen sind dabei jederzeit gewährleistet.

Sollen pharmazeutische Mittel GMP-richtlinienkonform aus einem Behälter in einen anderen Behälter überführt werden, so ist es bewährte Praxis, denjenigen Behälter, aus dem das Mittel überführt werden soll, in einen Reinraum, der auch als Isolator bezeichnet wird, einzuschleusen und von dort in einen mit dem Reinraum koppelbaren Behälter zu überführen.

Derartige Isolatoren sind zumeist ortsfest angeordnet. Bei aus dem Stand der Technik vorbekannten Systemen ist es daher erforderlich, einen entsprechenden Behälter, in den das pharmazeutische Mittel aus dem Isolator überführt werden soll, exakt relativ zu dem Isolator zu positionieren, um eine entsprechende Kopplung zwischen einem Kopplungselement und beispielsweise einer mit dem Isolator verbundenen Trichteranordnung herzustellen.

Um dieses zu erreichen, ist es erforderlich, den Behälter mithilfe eines entsprechenden Hubsystems anzuheben. Bei Behältergewichten, die typischerweise im Bereich von einer Tonne und mehr liegen, ist hierbei nicht nur ein präzises Handling der Hebevorrichtung erforderlich, sondern es wurde in der Praxis auch gelegentlich beobachtet, dass bei entsprechenden Positionierungsfehlern der Isolator in unerwünschter Wiese angehoben wird oder aber Isolator und Behälter ungewollt voneinander entkoppelt werden.

Bei wiederum anderen aus dem Stand der Technik vorbekannten Systemen, die einen mit dem Isolator verbundenen Kompensator aufweisen, kommt es bei der Kopplung zu einer Streckung des Kompensators, was im Falle von Materialermüdung dazu führen kann, dass sich Risse in den entsprechenden gestreckten Bereichen bilden und hierdurch Bediener gefährdet werden können oder aber Qualitätseinbußen auf Seiten des pharmazeutischen Mittels auftreten können. Ein solches System ist beispielsweise aus EP 3 524 365 B9 bekannt, das eine Überführungsanordnung nach dem Oberbegriff des Anspruchs 1 offenbart.

Eine weitere Herausforderung bei derartigen Systemen liegt darin, dass ein solcher Kompensator in Kontakt mit dem pharmazeutischen Mittel tritt und daher aufwendig im eingebauten Zustand sterilisiert werden muss, was ggf. nur schwer oder gar nicht möglich ist. Des Weiteren ist bei bekannten Systemen ein exaktes Ausrichten des Behälters gegenüber dem Isolator notwendig, da eine gedichtete Verbindung mit dem Isolator hergestellt werden soll.

Vor diesem Hintergrund lag der Erfindung die Aufgabe zugrunde, eine Überführungsanordnung der eingangs genannten Art dahingehend weiterzubilden, dass die im Stand der Technik aufgefundenen Nachteile möglichst weitgehend behoben werden. Insbesondere war eine Überführungsanordnung anzugeben, die sich durch eine vereinfachte Bedienbarkeit und eine hohe Integrität auszeichnet sowie darüber hinaus mindestens die produktberührenden Teile auf vereinfachte Weise sterilisierbar sind. Erfindungsgemäß wird die Aufgabe bei einer Überführungsanordnung der eingangs genannten Art durch einen mit dem Isolator verbindbaren Kompensator gelöst, wobei die Trichteranordnung in den Kompensator einsetzbar ist und im eingesetzten Zustand der Trichteranordnung dicht, insbesondere hermetisch dicht, mit dem Kompensator verschlossen ist, insbesondere wobei der Kompensator zur Sterilisation entnehmbar ist. Die Erfindung macht sich die Erkenntnis zunutze, dass durch die Verwendung des Kompensators erreicht wird, dass die Trichteranordnung, welche mit dem Behälter verbunden ist, manuell abgesenkt werden kann und auf diese Weise der Verbindungsabschnitt der Trichteranordnung mit dem mit dem Behälter verbundenen Kopplungselement gekoppelt werden kann. Hierdurch kann auf die Verwendung eines Hubsystems für den Behälter sowie eine entsprechende Steuerung mit Sensorik verzichtet werden. Gleichzeitig werden durch die Verwendung eines Kompensators zu einem gewissen Grad Ausrichtungstoleranzen zwischen Behälter und Isolator, insbesondere in einer Längsrichtung, kompensiert.

Gemäß einer Ausführungsform ist der Kompensator dazu eingerichtet, Ausrichtungstoleranzen in einem Toleranzbereich in Richtung der Längsachse des Kompensators und in eine Richtung orthogonal dazu auszugleichen. Auf diese Weise wird die Positionierung des Behälters unter dem Isolator vereinfacht. Ungenauigkeiten bei der Ausrichtung des Behälters können mit der erfindungsgemäßen Anordnung ausgeglichen werden.

Im Übrigen ist die Überführungsanordnung derart ausgelegt, dass im Zuge der Kopplung des Kopplungselements, welches mit dem Behälter verbunden ist, und der Trichteranordnung der Kompensator gestaucht wird, sodass - im Vergleich zu einer Streckung des Kompensators - ein geringeres Beschädigungs- bzw. Rissrisiko im Bereich des Kompensators besteht, was sich positiv auf die Gesamtintegrität des Systems auswirkt.

Weitere Vorteile ergeben sich in Bezug auf die Sterilisierung der Komponenten der Überführungsanordnung. So kann die Trichteranordnung zusammen mit dem Verbindungsabschnitt aus dem Isolator entnommen und in einem Autoklav sterilisiert werden. Das mit dem Behälter verbindbare Kopplungselement wiederum wird zusammen mit dem Behälter inline gereinigt und sterilisiert. Eine Sterilisation in einem Zustand, in dem Kopplungselement und Trichteranordnung gekoppelt sind, entfällt. Vorzugsweise ist der Kompensator mit dem Isolator verbunden. Die Trichteranordnung, welche zuvor in einem Autoklav sterilisiert worden ist, kann entsprechend verpackt bzw. versiegelt in den Isolator eingeschleust werden, dort ausgepackt werden und sodann in dem Kompensator montiert werden.

Gemäß einer Ausführungsform weist das Kopplungselement ein Betätigungsmittel auf, welches mit dem ersten Verschlussmittel gekoppelt ist und dazu eingerichtet ist, das erste Verschlussmittel in die Offenstellung und/oder die Schließstellung zu überführen. Auf diese Weise kann durch die Betätigung des Betätigungsmittels das erste Verschlussmittel des Kopplungselements in die betreffende Offenstellung und Schließstellung überführt werden.

Gemäß einer Ausführungsform ist das erste Verschlussmittel als erste Klappe ausgebildet. Gemäß einer Ausführungsform ist das zweite Verschlussmittel als zweite Klappe ausgebildet. Vorzugsweise sind die Klappen des Kopplungselements und der Trichteranordnung in dem gekoppelten Zustand benachbart zueinander angeordnet und bilden eine Doppelklappe aus. Als gekoppelter Zustand wird jener Zustand verstanden, bei dem das Kopplungselement und der Verbindungsabschnitt der Trichteranordnung miteinander gekoppelt sind. Dabei bewirkt eine Betätigung des Betätigungsmittels in dem gekoppelten Zustand, dass die Klappen gemeinsam in die Offenstellung und/oder die Schließstellung überführt werden. Das bedeutet, dass durch die Betätigung des Betätigungsmittels beide Klappen, die eine Doppelklappe ausbilden, gemeinsam betätigt werden, das heißt, gemeinsam in die Offenstellung gebracht werden oder die entsprechende Schließstellung.

Gemäß einer Ausführungsform weist der Kompensator einen entlang einer Längsachse des Kompensators starren Abschnitt auf und einen entlang der Längsachse stauchbaren Abschnitt. Auf diese Weise wird erreicht, dass der Kompensator insgesamt um einen Längenbereich stauchbar ist, wobei durch die Stauchbarkeit - im Gegensatz zu einer Streckung - vermieden wird, dass sich Risse innerhalb des stauchbaren Abschnitts bilden und hierdurch die Integrität der Überführungsanordnung gefährdet wird.

Gemäß einer Ausführungsform weisen der Kompensator und/oder die Trichteranordnung eine Dichtungsanordnung auf, welche die Trichteranordnung hermetisch dicht gegenüber dem Kompensator abdichtet. Auf diese Weise wird vermieden, dass ein Medium zwischen Kompensator und Trichteranordnung in den Isolator eindringen oder aus diesem austreten kann.

Die Erfindung ist vorstehend unter Bezugnahme auf eine Überführungsanordnung beschrieben worden. In einem weiteren Aspekt betrifft die Erfindung ein Überführungssystem zum aseptischen Überführen eines pharmazeutischen Mittels mit einem Isolator, einem Behälter und einer Überführungsanordnung zum aseptischen Überführen eines pharmazeutischen Mittels aus dem Isolator in den Behälter. Die Erfindung löst die eingangs bezeichnete Aufgabe in Bezug auf das Überführungssystem, indem die Überführungsanordnung nach einem der vorstehenden Ausführungsbeispiele ausgebildet ist.

Das Überführungssystem macht sich die gleichen Vorteile und bevorzugten Ausführungsformen zunutze wie die erfindungsgemäße Überführungsanordnung und umgekehrt. Diesbezüglich wird auf die obigen Ausführungen verwiesen und deren Inhalt hier mit einbezogen.

In einem weiteren Aspekt betrifft die Erfindung die Verwendung einer Überführungsanordnung nach einem der vorstehenden Ausführungsbeispiele zum aseptischen Überführen eines pharmazeutischen Mittels aus einem Isolator in einen Behälter. Auch die Verwendung macht sich die gleichen Vorteile und bevorzugten Ausführungsformen zunutze wie die erfindungsgemäße Überführungsanordnung, das erfindungsgemäße Überführungssystem und umgekehrt. Diesbezüglich wird auf die obigen Ausführungen verwiesen und deren Inhalt hier mit einbezogen.

In einem weiteren Aspekt betrifft die Erfindung ein Verfahren zum aseptischen Überführen eines pharmazeutischen Mittels aus einem Isolator in einen Behälter mittels einer Überführungsanordnung nach einem der vorstehenden Ausführungsbeispiele. Die Erfindung löst die eingangs bezeichnete Aufgabe in Bezug auf das Verfahren, indem dieses die Schritte aufweist: Sterilisieren der Trichteranordnung, insbesondere in einem Autoklav, Reinigen und/oder Sterilisieren des Behälters und des damit gekoppelten Kopplungselements, Einschleusen der Trichteranordnung in einen Isolator und Einsetzen der Trichteranordnung in den Kompensator, Absenken der Trichteranordnung und Koppeln des Verbindungsabschnitts der Trichteranordnung mit dem Kopplungselement, Überführen des ersten und des zweiten Verschlussmittels in die jeweilige Offenstellung und Überführen eines pharmazeutischen Mittels aus dem Isolator in den Behälter. Auch das Verfahren macht sich die gleichen Vorteile und bevorzugten Ausführungsformen zunutze wie die erfindungsgemäße Überführungsanordnung, das erfindungsgemäße Überführungssystem und die erfindungsgemäße Verwendung sowie umgekehrt.

Dem erfindungsgemäßen Verfahren liegt die Erkenntnis zugrunde, dass die Trichteranordnung zunächst separat sterilisiert werden kann und lediglich der Behälter und das gekoppelte Kopplungselement inline gereinigt und sterilisiert werden müssen. Anschließend kann die Trichteranordnung in den Isolator eingeschleust werden, eine gegebenenfalls vorhandene Umverpackung entfernt werden und die Trichteranordnung sodann in den Kompensator eingesetzt werden, wobei Trichteranordnung und Kompensator gegenüber einander hermetisch abgedichtet sind.

Die Trichteranordnung kann nunmehr unterstützt durch den Kompensator abgesenkt werden, wodurch der Kompensator gestaucht wird. Hierdurch können Höhenunterschiede zwischen Behälter und Isolator innerhalb bestimmter Grenzen überwunden werden. Nach dem Koppeln des Verbindungsabschnitts der Trichteranordnung mit dem Kopplungselement können die Verschlussmittel in die jeweilige Offenstellung überführt werden und ein pharmazeutisches Mittel aus dem Isolator in den Behälter übergeben werden. Hierdurch entfällt eine Sterilisation von Trichteranordnung und Kopplungselement im gekoppelten Zustand und darüber hinaus ein aufwendiges Anheben des Behälters zum Zwecke der Kopplung.

Das Verfahren wird dadurch weitergebildet, dass das Absenken der Trichteranordnung manuell erfolgt, wobei durch das Absenken die erste Klappe des Kopplungselements und die zweite Klappe des Verbindungsabschnitts der Trichteranordnung gekoppelt werden. Mit anderen Worten bilden die Klappen damit eine Doppelklappe aus. Gemäß einer Ausführungsform wird der Kompensator durch das Absenken der Trichteranordnung gestaucht.

Das Verfahren wird ferner dadurch weitergebildet, dass das Reinigen und/oder Sterilisieren des Behälters und des damit gekoppelten Kopplungselements mittels eines Inline-Verfahrens erfolgt, insbesondere mittels Clean-In-Place (CIP)-Sterilisierung oder Sterilization-In-Place (SIP). Die genannten Sterilisierungsverfahren haben sich als besonders geeignet für die entsprechende Inline-Sterilisierung erwiesen.

Gemäß einer Ausführungsform wird das Verfahren durch die Schritte weitergebildet: Überführen des ersten und des zweiten Verschlussmittels in die Schließstellung nach dem Überführen des pharmazeutischen Mittels aus dem Isolator in den Behälter, Entkoppeln des Verbindungsabschnitts der Trichteranordnung von dem Kopplungselement.

Nach dem Überführen des pharmazeutischen Mittels werden sowohl die Trichteranordnung als auch das Kopplungselement durch die jeweiligen Verschlussmittel verschlossen, sodass nach dem Entkoppeln und Separieren der Komponenten vermieden wird, dass das pharmazeutische Mittel entweder aus der Trichteranordnung oder dem Kopplungselement austritt.

Die Erfindung wird nachfolgend anhand eines bevorzugten Ausführungsbeispiels unter Bezugnahme auf die beigefügten Figuren näher beschrieben.

Hierbei zeigen:
- Fig. 1:: ein Ausführungsbeispiel eines erfindungsgemäßen Überführungssystems in einem entkoppelten Zustand;
- Fig. 2:: das Ausführungsbeispiel des erfindungsgemäßen Überführungssystems gemäß Fig. 1 in einem gekoppelten Zustand;
- Fig. 3a-3h:: das Ausführungsbeispiel des erfindungsgemäßen Überführungssystems gemäß den Fig. 1 und 2 in unterschiedlichen Betriebspositionen, und
- Fig. 4:: ein Ausführungsbeispiel des erfindungsgemäßen Verfahrens in einer Darstellung als Blockschaltbild.

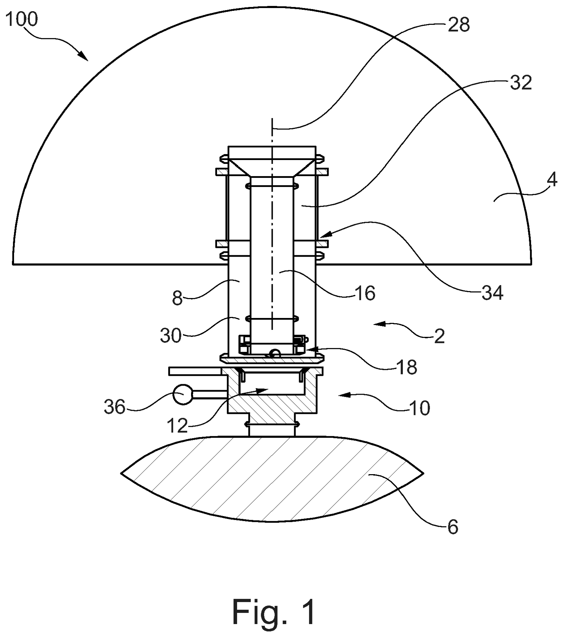

Fig. 1 zeigt ein Überführungssystem 100 zum aseptischen Überführen eines pharmazeutischen Mittels aus einem Isolator 4 in einen Behälter 6. Das Überführungssystem 100 weist den Isolator 4 und den Behälter 6 auf sowie eine Überführungsanordnung 2 zum Überführen eines pharmazeutischen Mittels aus dem Isolator 4 in den Behälter 6. Die Überführungsanordnung 2 weist ein mit dem Behälter 6 verbindbares Kopplungselement 10 auf sowie eine Trichteranordnung 16 und einen mit dem Isolator 4 verbundenen Kompensator 8.

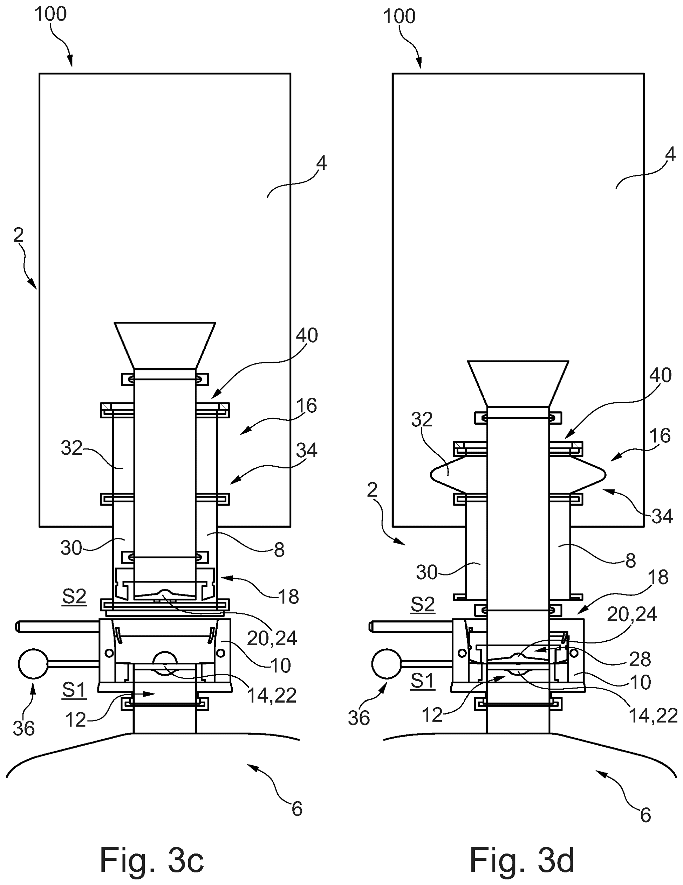

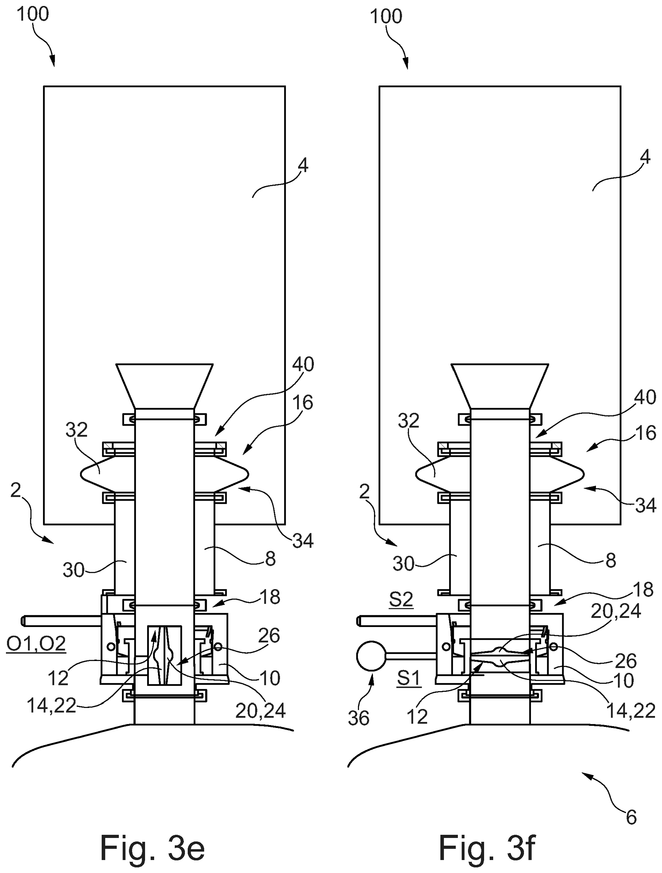

Das Kopplungselement 10 weist einen Durchlass 12 auf. Das Kopplungselement 10 weist ferner ein betätigbares erstes Verschlussmittel 14 auf, welches in den Fig. 3c-h näher gezeigt ist. Das erste Verschlussmittel 14 gibt in einer Offenstellung O1 einen Durchlass 12 durch das Kopplungselement 10 frei. Das erste Verschlussmittel 14 sperrt in einer Schließstellung S1 den Durchlass 12 durch das Kopplungselement 10.

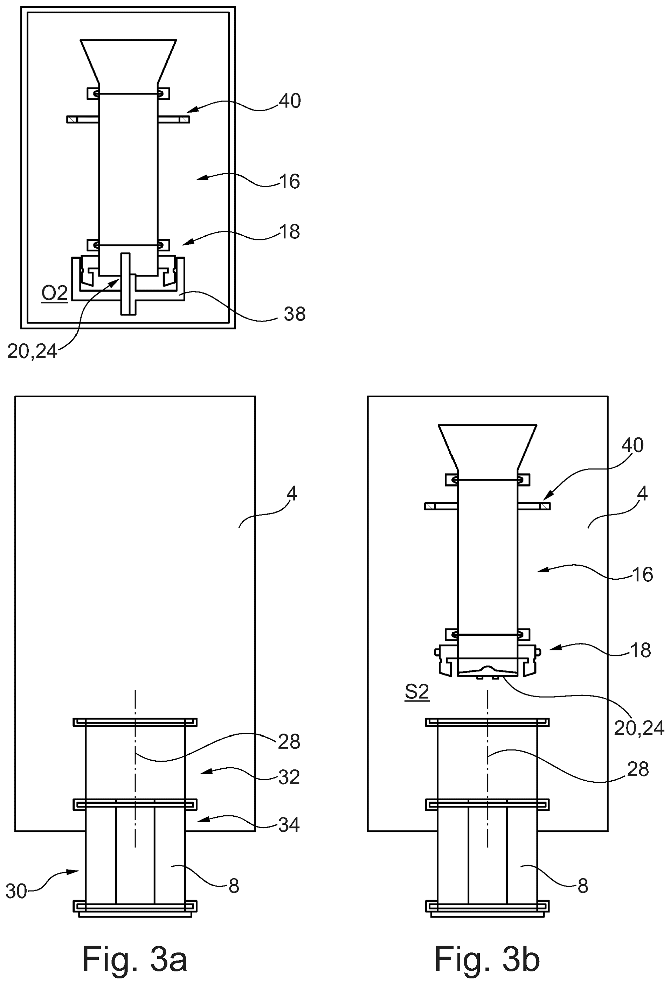

Die Trichteranordnung 16 weist einen Verbindungsabschnitt 18 auf. Der Verbindungsabschnitt 18 ist dazu eingerichtet, mit dem Kopplungselement 10 reversibel gekoppelt zu werden. In dem in der Fig. 1 gezeigten Zustand sind die Trichteranordnung 16 und das Kopplungselement 10 voneinander separiert, das heißt, nicht gekoppelt. Der Verbindungsabschnitt 18 weist ein zweites Verschlussmittel 20 auf, welches ebenfalls in den Fig. 3a-h detailliert ist. Das zweite Verschlussmittel 20 gibt in einer Offenstellung O2 einen Durchlass durch die Trichteranordnung frei. Das zweite Verschlussmittel 20 sperrt in einer Schließstellung S2 einen Durchlass durch die Trichteranordnung 16. In dem in der Fig. 1 gezeigten Zustand befinden sich sowohl das erste Verschlussmittel 14 als auch das zweite Verschlussmittel 20 in der jeweiligen Schließstellung S1, S2.

Die Trichteranordnung 16 ist in den Kompensator 8 eingesetzt und mit der Trichteranordnung 16 dicht, insbesondere hermetisch dicht, verschlossen. Das Kopplungselement 10 weist ein Betätigungsmittel 36 auf. Das Betätigungsmittel 36 ist mit dem ersten Verschlussmittel 14 gekoppelt und dazu eingerichtet, das erste Verschlussmittel 14 in die Offenstellung O1 und die Schließstellung O2 zu überführen.

Der Kompensator 8 weist einen entlang einer Längsachse 28 des Kompensators 8 starren Abschnitt 30 auf und einen entlang der Längsachse 28 stauchbaren Abschnitt 32. Ferner weisen Kompensator 8 und Trichteranordnung 16 jeweils eine Dichtungsanordnung 34, 40 auf. Die Dichtungsanordnungen 34, 40 sind dazu eingerichtet, die Trichteranordnung 16 hermetisch dicht gegenüber dem Kompensator 8 abzudichten.

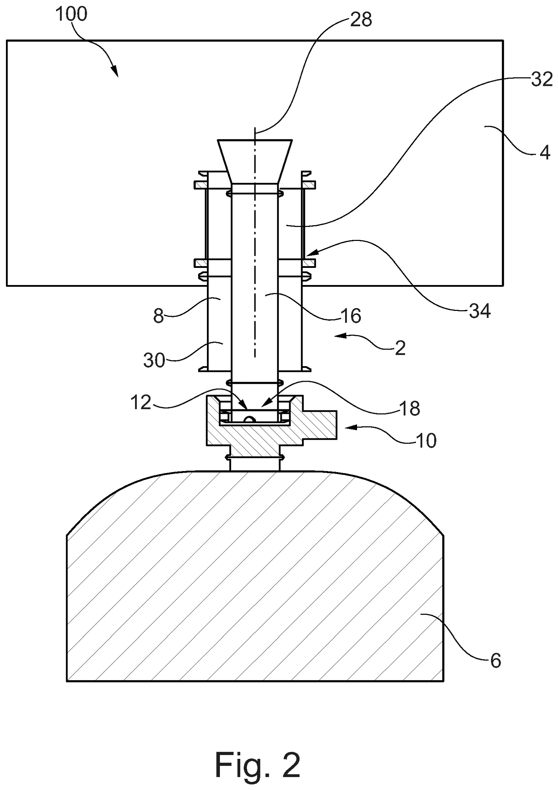

In dem in der Fig. 2 gezeigten Zustand ist erneut der Kompensator 8 mit dem Isolator 4 verbunden und das Kopplungselement 10 mit dem Behälter 6. Die in dem Kompensator 8 aufgenommene Trichteranordnung 16 ist mit ihrem Verbindungsabschnitt 18 mit dem Kopplungselement 10 gekoppelt. In diesem Zustand kann, wie in den Fig. 3a-3h detailliert ist, durch Öffnen der Verschlussmittel 14 und 20 eine Verbindung zwischen Isolator 4 und Behälter 6 hergestellt werden, sodass das pharmazeutische Mittel von dem Isolator 4 in den Behälter 6 überführt werden kann. Hierzu wurde das Betätigungsmittel 36 im Vergleich zu dem in der Fig. 1 gezeigten Zustand um die Längsachse 28 verschwenkt.

Die Fig. 3a-3h veranschaulichen einen typischen Ablauf zum aseptischen Überführen eines pharmazeutischen Mittels aus dem Isolator 4 in den Behälter 6 mittels der Überführungsanordnung 2. In dem in der Fig. 3a gezeigten Zustand ist zunächst der Kompensator 8 mit dem Isolator 4 verbunden. Der Kompensator 8 ist, wie bereits in den Fig. 1 und 2 beschrieben, entlang seiner Längsachse 28 stauchbar ausgeführt. Hierzu ist ein stauchbarer Abschnitt 32 vorgesehen, der benachbart zu dem starren Abschnitt 30 angeordnet ist. Wie dem oberen Bereich der Fig. 3a zu entnehmen ist, ist in diesem Ausgangsschritt die Trichteranordnung 16 noch nicht in den Isolator 4 eingeschleust worden. Exemplarisch wird die Trichteranordnung 16 zunächst extern mithilfe einer Sterilisierungseinrichtung 38 sterilisiert, beispielsweise mittels eines Autoklavs. Die Trichteranordnung 16 weist im Bereich des Verbindungsabschnitts 18 ein zweites Verschlussmittel 20 auf, welches als zweite Klappe 24 ausgebildet ist. Zum Zwecke der Sterilisierung befindet sich die zweite Klappe 24 in der Offenstellung O2.

In dem in der Fig. 3b gezeigten Zustand wurde nunmehr die Trichteranordnung 16 samt Verbindungsabschnitt 18 in den Isolator 4 eingeschleust. Optional kann die Trichteranordnung 16 nach dem Sterilisieren entsprechend verpackt werden und die Verpackung nach dem Einschleusen in den Isolator 4 entfernt werden. Die zweite Klappe 24 wurde nunmehr in die Schließstellung S2 überführt.

In dem in der Fig. 3c gezeigten Zustand wurde die Trichteranordnung 16 in den Kompensator 8 eingesetzt. Die Trichteranordnung 16 ist mit dem Kompensator 8 hermetisch dicht verschlossen. Das zweite Verschlussmittel 20 bzw. die zweite Klappe 24 befindet sich auch weiterhin in der Schließstellung S2. Im unteren Bereich der Fig. 3c ist schematisch angedeutet der Behälter 6 erkennbar, der mit einem Kopplungselement 10 verbunden ist. Das Kopplungselement 10 weist den Durchlass 12 und das Verschlussmittel 14 auf, welches als erste Klappe 22 ausgebildet ist. In dem in der Fig. 3c gezeigten Zustand sind Kopplungselement 10 und Trichteranordnung 16 nicht gekoppelt. Entsprechend befinden sich auch die erste Klappe 22 und die zweite Klappe 24 in der jeweiligen Schließstellung S1, S2. Der Kompensator 8, insbesondere der stauchbare Abschnitt 32, befindet sich in einem nicht oder nur geringfügig gestauchten Zustand.

In dem in der Fig. 3d gezeigten Zustand wurde die Trichteranordnung 16 in Richtung des Kopplungselements 10 abgesenkt und eine Kopplung zwischen Kopplungselement 10 und Trichteranordnung 16 hergestellt. Damit geht eine Stauchung des Kompensators 8 einher, die sich dadurch zeigt, dass der stauchbare Abschnitt 32 entsprechend gestaucht wird. Die Klappen 22, 24 des Kopplungselements 10 und der Trichteranordnung 16 sind in dem gekoppelten Zustand benachbart zueinander angeordnet und bilden eine Doppelklappe 26 aus. Eine Betätigung des Betätigungsmittels 36 in dem in Fig. 3d gezeigten gekoppelten Zustand bewirkt, dass die Klappen 22, 24 gemeinsam in die Offenstellung O1, O2 und die Schließstellung S1, S2 überführt werden. In Fig. 3d befinden sich die erste Klappe 22 und die zweite Klappe 24 unverändert in der jeweiligen Schließstellung S1, S2.

In dem in Fig. 3e gezeigten Zustand ist das Kopplungselement 10 wie auch in Fig. 3d mit der Trichteranordnung 16 gekoppelt. Allerdings wurden durch Betätigung des Betätigungsmittels 36 die Klappen 22, 24 in die jeweilige Offenstellung O1, O2 überführt, sodass eine Verbindung zwischen Isolator 4 und Behälter 6 hergestellt wird und ein pharmazeutisches Mittel aseptisch aus dem Isolator 4 in den Behälter 6 überführt werden kann.

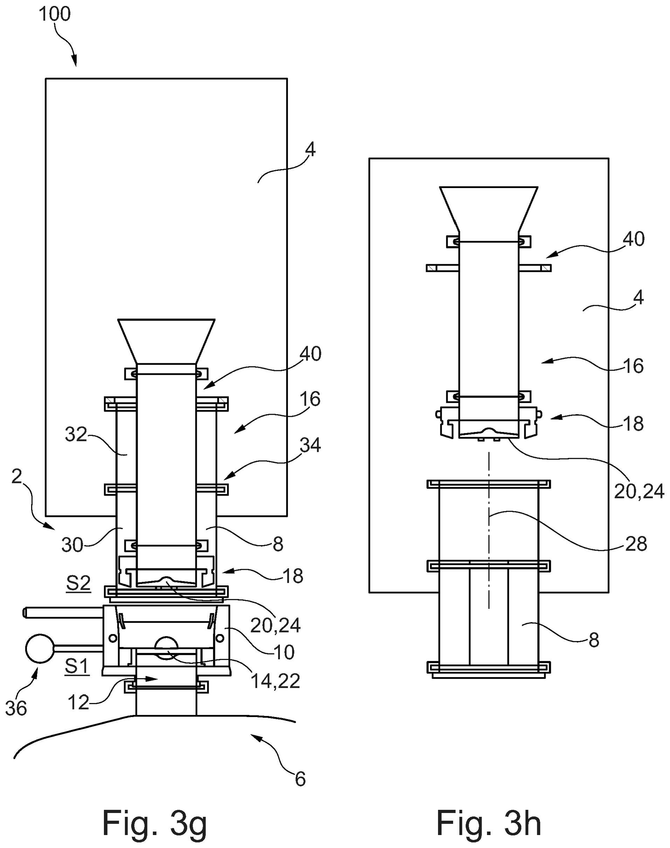

Nach dem Überführen des pharmazeutischen Mittels kann durch Betätigung des Betätigungsmittels 36 die Doppelklappe 26 verschlossen werden und in dem in Fig. 3g gezeigten Zustand das Kopplungselement 10 von der Trichteranordnung 16 entkoppelt werden. Hierdurch wird auch die erste Klappe 22 von der zweiten Klappe 24 separiert, sodass die erste Klappe 22 nunmehr das Kopplungselement 10 verschließt und die zweite Klappe 24 den Verbindungsabschnitt 18 der Trichteranordnung 16. Das unerwünschte Austreten des pharmazeutischen Mittels wird somit vermieden.

In dem in Fig. 3h gezeigten Zustand wurde die Trichteranordnung 16 aus dem Kompensator 8 entfernt, kann aus dem Isolator 4 ausgeschleust werden und, wie in Fig. 3a oben gezeigt, sterilisiert werden.

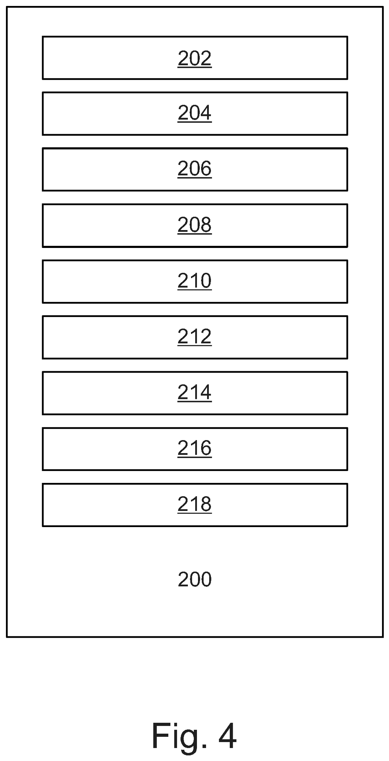

Fig. 4 zeigt ein exemplarisches Blockschaltbild eines Verfahrens 200 zum aseptischen Überführen eines pharmazeutischen Mittels aus dem Isolator 4 in den Behälter 6 mittels der Überführungsanordnung 2. Das Verfahren 200 weist die Schritte auf: Sterilisieren 202 der Trichteranordnung 16, insbesondere in einem Autoklav, Reinigen und/oder Sterilisieren 204 des Behälters 6 und des damit gekoppelten Kopplungselements 10, Einschleusen 206 der Trichteranordnung 16 in einen Isolator 4 und Einsetzen der Trichteranordnung 16 in den Kompensator 8, Absenken 208 der Trichteranordnung 16 und Koppeln 210 des Verbindungsabschnitts 18 der Trichteranordnung 16 mit dem Kopplungselement 10, Überführen 212 des ersten und des zweiten Verschlussmittels 14, 20 in die jeweilige Offenstellung O1, O2 und Überführen 216 eines pharmazeutischen Mittels aus dem Isolator 4 in den Behälter 6, Überführen 216 des ersten und des zweiten Verschlussmittels 14, 20 in die Schließstellung S1, S2 nach dem Überführen des pharmazeutischen Mittels aus dem Isolator 4 in den Behälter 6, Entkoppeln 218 des Verbindungsabschnitts 18 der Trichteranordnung 16 von dem Kopplungselement 10.

Das Absenken 208 der Trichteranordnung 16 kann manuell erfolgen, wobei durch das Absenken 208 und Koppeln der Trichteranordnung 16 mit dem Kopplungselement 10 die erste Klappe 22 des Kopplungselements 10 und die zweite Klappe 24 des Verbindungsabschnitts 18 der Trichteranordnung 16 gekoppelt werden. Der Kompensator 8 wird durch das Absenken 208 der Trichteranordnung 16 gestaucht. Das Reinigen und/oder Sterilisieren 204 des Behälters 6 und des damit gekoppelten Kopplungselements 10 kann mittels eines Inline-Verfahrens erfolgen, insbesondere mittels Clean-In-Place (CIP)-Sterilisierung oder Sterilization-In-Place (SIP).

### Bezugszeichenliste

- 2: Überführungsanordnung
- 4: Isolator
- 6: Behälter
- 8: Kompensator
- 10: Kopplungselement
- 12: Durchlass des Kopplungselements
- 14: erstes Verschlussmittel
- 16: Trichteranordnung
- 18: Verbindungsabschnitt der Trichteranordnung
- 20: zweites Verschlussmittel
- 22: erste Klappe
- 24: zweite Klappe
- 26: Doppelklappe
- 28: Längsachse des Kompensators
- 30: starrer Abschnitt
- 32: stauchbarer Abschnitt
- 34: Dichtungsanordnung des Kompensators
- 36: Betätigungsmittel des Kopplungselements
- 38: Sterilisierungseinrichtung
- 40: Dichtungsanordnung der Trichteranordnung
- 100: Überführungssystem
- 200: Verfahren
- 202: Sterilisieren der Trichteranordnung
- 204: Reinigen und/oder Sterilisieren des Behälters und Kopplungselements
- 206: Einschleusen der Trichteranordnung in einen Isolator
- 208: Absenken der Trichteranordnung
- 210: Koppeln des Verbindungsabschnitts mit dem Kopplungselement
- 212: Überführen des ersten und des zweiten Verschlussmittels in die Offenstellung
- 214: Überführen eines pharmazeutischen Mittels aus einem Isolator in den Behälter
- 216: Überführen des ersten und des zweiten Verschlussmittels in die Schließstellung
- 218: Entkoppeln des Verbindungsabschnitts von dem Kopplungselement
- O1: Offenstellung des ersten Verschlussmittels
- S1: Schließstellung des ersten Verschlussmittels
- O2: Offenstellung des ersten Verschlussmittels
- S2: Schließstellung des ersten Verschlussmittels

## Patentansprüche

1. Überführungsanordnung (2) zum aseptischen Überführen eines pharmazeutischen Mittels aus einem Isolator (4) in einen Behälter (6), mit
- einem mit dem Behälter (6) verbindbaren Kopplungselement (10), mit einem Durchlass (12) und einem betätigbaren ersten Verschlussmittel (14), welches in einer Offenstellung (O1) einen Durchlass (12) durch das Kopplungselement (10) freigibt und in einer Schließstellung (S1) den Durchlass (12) durch das Kopplungselement (10) sperrt, und
- einer Trichteranordnung (16) mit einem Verbindungsabschnitt (18), welcher dazu eingerichtet ist, mit dem Kopplungselement (10) reversibel gekoppelt zu werden, wobei der Verbindungsabschnitt (18) ein zweites Verschlussmittel (20) aufweist, welches in einer Offenstellung (O2) einen Durchlass durch die Trichteranordnung (16) freigibt und in einer Schließstellung (S2) einen Durchlass durch die Trichteranordnung (16) sperrt,
**gekennzeichnet durch** einen mit dem Isolator (4) verbindbaren Kompensator (8), wobei die Trichteranordnung (16) in den Kompensator (8) einsetzbar ist und im eingesetzten Zustand mit der Trichteranordnung (16) dicht, insbesondere hermetisch dicht, mit dem Kompensator (8) verschlossen ist, insbesondere wobei der Kompensator (8) zur Sterilisation entnehmbar ist.

2. Überführungsanordnung (2) nach Anspruch 1,
wobei das Kopplungselement (10) ein Betätigungsmittel (36) aufweist, welches mit dem ersten Verschlussmittel (14) gekoppelt ist und dazu eingerichtet ist, das erste Verschlussmittel (14) in die Offenstellung (O1) und/oder die Schließstellung (O2) zu überführen.

3. Überführungsanordnung (2) nach Anspruch 1 oder 2,
wobei das erste Verschlussmittel (14) als erste Klappe (22) ausgebildet ist und das zweite Verschlussmittel (20) als zweite Klappe (24).

4. Überführungsanordnung (2) nach Anspruch 3,
wobei die Klappen (22, 24) des Kopplungselements (10) und der Trichteranordnung (16) in dem gekoppelten Zustand benachbart zueinander angeordnet sind und eine Doppelklappe (26) ausbilden.

5. Überführungsanordnung (2) nach Anspruch 4,
wobei eine Betätigung des Betätigungsmittels (36) in dem gekoppelten Zustand bewirkt, dass die Klappen (22, 24) gemeinsam in die in Offenstellung (O1, O2) und/oder die Schließstellung (S1, S2) überführt werden.

6. Überführungsanordnung (2) nach einem der vorstehenden Ansprüche,
wobei der Kompensator (8) einen entlang einer Längsachse (28) des Kompensators (8) starren Abschnitt aufweist und einen entlang der Längsachse (28) stauchbaren Abschnitt (32).

7. Überführungsanordnung (2) nach einem der vorstehenden Ansprüche,
wobei der Kompensator (8) und/oder die Trichteranordnung (16) eine Dichtungsanordnung (34, 40) aufweist, welche die Trichteranordnung (16) hermetisch dicht gegenüber dem Kompensator (8) abdichtet.

8. Überführungsanordnung (2) nach einem der vorstehenden Ansprüche,
wobei der Kompensator (8) dazu eingerichtet ist, Ausrichtungstoleranzen in einem Toleranzbereich in Richtung der Längsachse (28) des Kompensators (8) und/oder in eine Richtung orthogonal dazu auszugleichen.

9. Überführungssystem (100) zum aseptischen Überführen eines pharmazeutischen Mittels, mit
- einem Isolator (4),
- einem Behälter (6), und
- einer Überführungsanordnung (2) zum aseptischen Überführen eines pharmazeutischen Mittels aus dem Isolator (4) in den Behälter (6), wobei die Überführungsanordnung (2) nach einem der vorstehenden Ansprüche ausgebildet ist.

10. Verwendung einer Überführungsanordnung (2) nach einem der vorstehenden Ansprüche zum aseptischen Überführen eines pharmazeutischen Mittels aus einem Isolator (4) in einen Behälter (6).

11. Verfahren (200) zum aseptischen Überführen eines pharmazeutischen Mittels aus einem Isolator (4) in einen Behälter (6) mittels einer Überführungsanordnung (2) nach einem der vorstehenden Ansprüche, wobei das Verfahren (200) die Schritte aufweist:
- Sterilisieren (202) der Trichteranordnung (16), insbesondere in einem Autoklav,
- Reinigen und/oder Sterilisieren (204) des Behälters (6) und des damit gekoppelten Kopplungselements (10),
- Einschleusen (206) der Trichteranordnung (16) in einen Isolator (4) und Einsetzen der Trichteranordnung (16) in den Kompensator (8),
- Absenken (208) der Trichteranordnung (16) und Koppeln (210) des Verbindungsabschnitts (18) der Trichteranordnung (16) mit dem Kopplungselement (10),
- Überführen (212) des ersten und des zweiten Verschlussmittels (14, 20) in die jeweilige Offenstellung (O1, O2) und Überführen eines pharmazeutischen Mittels aus dem Isolator (4) in den Behälter (6).

12. Verfahren (200) nach Anspruch 11,
wobei das Absenken (208) der Trichteranordnung (16) manuell erfolgt und wobei durch das Absenken (208) die erste Klappe (22) des Kopplungselements (10) und die zweite Klappe (24) des Verbindungsabschnitts (18) der Trichteranordnung (16) gekoppelt werden.

13. Verfahren (200) nach Anspruch 11 der 12,
wobei der Kompensator (8) durch das Absenken (208) der Trichteranordnung (16) gestaucht wird.

14. Verfahren (200) nach einem der Ansprüche 11 bis 13,
wobei das Reinigen und/oder Sterilisieren (204) des Behälters (6) und des damit gekoppelten Kopplungselements (10) mittels eines Inline-Verfahrens erfolgt, insbesondere mittels Clean-In-Place (CIP)-Sterilisierung oder Sterilization-In-Place (SIP).

15. Verfahren (200) nach einem der Ansprüche 11 bis 14, mit den weiteren Schritten:
- Überführen (216) des ersten und des zweiten Verschlussmittels (14, 20) in die Schließstellung (S1, S2) nach dem Überführen des pharmazeutischen Mittels aus dem Isolator (4) in den Behälter (6),
- Entkoppeln (218) des Verbindungsabschnitts (18) der Trichteranordnung (16) von dem Kopplungselement (10).

## Claims

1. Transfer arrangement (2) for aseptically transferring a pharmaceutical product from an isolator (4) into a container (6), comprising
- a coupling element (10) connectable to the container (6), having a passage (12) and an actuatable first closure means (14), which in an open position (O1) clears a passage (12) through the coupling element (10) and in a closed position (S1) blocks the passage (12) through the coupling element (10), and
- a funnel arrangement (16) having a connecting section (18) which is configured to be reversibly coupled to the coupling element (10), wherein the connecting section (18) comprises a second closure means (20) which in an open position (O2) clears a passage through the funnel arrangement (16) and in a closed position (S2) blocks a passage through the funnel arrangement (16),
**characterised by** a compensator (8) connectable to the isolator (4), wherein the funnel arrangement (16) is insertable into the compensator (8) and in the inserted state is sealed, in particular hermetically sealed, with the funnel arrangement (16) against the compensator (8), in particular wherein the compensator (8) is removable for sterilisation.

2. Transfer arrangement (2) according to claim 1,
wherein the coupling element (10) comprises an actuating means (36) which is coupled to the first closure means (14) and is configured to transfer the first closure means (14) into the open position (O1) and/or the closed position (O2).

3. Transfer arrangement (2) according to claim 1 or 2,
wherein the first closure means (14) is designed as a first flap (22) and the second closure means (20) as a second flap (24).

4. Transfer arrangement (2) according to claim 3,
wherein the flaps (22, 24) of the coupling element (10) and the funnel arrangement (16) are arranged adjacent to each other in the coupled state and form a double flap (26).

5. Transfer arrangement (2) according to claim 4,
wherein an actuation of the actuating means (36) in the coupled state causes the flaps (22, 24) to be transferred together into the open position (O1, O2) and/or the closed position (S1, S2).

6. Transfer arrangement (2) according to any of the preceding claims,
wherein the compensator (8) comprises a section rigid along a longitudinal axis (28) of the compensator (8) and a compressible section (32) along the longitudinal axis (28).

7. Transfer arrangement (2) according to any of the preceding claims,
wherein the compensator (8) and/or the funnel arrangement (16) comprises a sealing arrangement (34, 40) which seals the funnel arrangement (16) hermetically against the compensator (8).

8. Transfer arrangement (2) according to any of the preceding claims,
wherein the compensator (8) is configured to compensate for alignment tolerances within a tolerance range in the direction of the longitudinal axis (28) of the compensator (8) and/or in a direction orthogonal thereto.

9. Transfer system (100) for aseptically transferring a pharmaceutical product, comprising
- an isolator (4),
- a container (6), and
- a transfer arrangement (2) for aseptically transferring a pharmaceutical product from the isolator (4) into the container (6), wherein the transfer arrangement (2) is designed according to any of the preceding claims.

10. Use of a transfer arrangement (2) according to any of the preceding claims for aseptically transferring a pharmaceutical product from an isolator (4) into a container (6).

11. Method (200) for aseptically transferring a pharmaceutical product from an isolator (4) into a container (6) by means of a transfer arrangement (2) according to any of the preceding claims, wherein the method (200) comprises the steps:
- sterilising (202) the funnel arrangement (16), in particular in an autoclave, cleaning and/or sterilising (204) the container (6) and the coupling element (10) coupled thereto,
- introducing (206) the funnel arrangement (16) into an isolator (4) and inserting the funnel arrangement (16) into the compensator (8),
- lowering (208) the funnel arrangement (16) and coupling (210) the connecting section (18) of the funnel arrangement (16) to the coupling element (10),
- transferring (212) the first and the second closure means (14, 20) into the respective open position (O1, O2) and transferring a pharmaceutical product from the isolator (4) into the container (6).

12. Method (200) according to claim 11,
wherein the lowering (208) of the funnel arrangement (16) is performed manually and wherein by the lowering (208) the first flap (22) of the coupling element (10) and the second flap (24) of the connecting section (18) of the funnel arrangement (16) are coupled.

13. Method (200) according to claim 11 or 12,
wherein the compensator (8) is compressed by the lowering (208) of the funnel arrangement (16).

14. Method (200) according to any of claims 11 to 13,
wherein the cleaning and/or sterilising (204) of the container (6) and the coupling element (10) coupled thereto is performed by means of an inline method, in particular by means of Clean-In-Place (CIP) sterilisation or Sterilization-In-Place (SIP).

15. Method (200) according to any of claims 11 to 14, with the further steps:
- transferring (216) the first and the second closure means (14, 20) into the closed position (S1, S2) after transferring the pharmaceutical product from the isolator (4) into the container (6),
- decoupling (218) the connecting section (18) of the funnel arrangement (16) from the coupling element (10).

## Revendications

1. Ensemble de transfert (2) pour le transfert aseptique d'un produit pharmaceutique à partir d'un isolateur (4) dans un récipient (6), avec
- un élément de couplage (10) pouvant être relié au récipient (6), avec un passage (12) et un premier moyen de fermeture (14) actionnable qui, dans une position d'ouverture (O1), libère un passage (12) à travers l'élément de couplage (10) et, dans une position de fermeture (S1), coupe le passage (12) à travers l'élément de couplage (10), et
- un ensemble entonnoir (16) avec une section de liaison (18) qui est configurée pour être couplée de manière réversible à l'élément de couplage (10), dans lequel la section de liaison (18) présente un second moyen de fermeture (20) qui, dans une position d'ouverture (O2), libère un passage à travers l'ensemble entonnoir (16) et, dans une position de fermeture (S2), bloque un passage à travers l'ensemble entonnoir (16),
**caractérisé par** un compensateur (8) pouvant être relié à l'isolateur (4), dans lequel l'ensemble entonnoir (16) peut être mis en place dans le compensateur (8) et dans l'état mis en place avec l'ensemble entonnoir (16) est fermé de manière étanche, en particulier hermétiquement étanche, avec le compensateur (8), en particulier dans lequel le compensateur (8) est amovible pour stérilisation.

2. Ensemble de transfert (2) selon la revendication 1,
dans lequel l'élément de couplage (10) présente un moyen d'actionnement (36) qui est couplé au premier moyen de fermeture (14) et est configuré pour amener le premier moyen de fermeture (14) dans la position d'ouverture (O1) et/ou la position de fermeture (O2).

3. Ensemble de transfert (2) selon la revendication 1 ou 2,
dans lequel le premier moyen de fermeture (14) est réalisé en tant que premier clapet (22) et le second moyen de fermeture (20) en tant que second clapet (24).

4. Ensemble de transfert (2) selon la revendication 3,
dans lequel les clapets (22, 24) de l'élément de couplage (10) et de l'ensemble entonnoir (16) sont disposés adjacents l'un à l'autre dans l'état couplé et réalisent un clapet double (26).

5. Ensemble de transfert (2) selon la revendication 4,
dans lequel un actionnement du moyen d'actionnement (36) dans l'état couplé fait que les clapets (22, 24) sont amenés ensemble dans la en position d'ouverture (O1, O2) et/ou la position de fermeture (S1, S2).

6. Ensemble de transfert (2) selon l'une quelconque des revendications précédentes,
dans lequel le compensateur (8) présente une section rigide le long d'un axe longitudinal (28) du compensateur (8) et une section (32) compressible le long de l'axe longitudinal (28).

7. Ensemble de transfert (2) selon l'une quelconque des revendications précédentes,
dans lequel le compensateur (8) et/ou l'ensemble entonnoir (16) présentent un ensemble d'étanchéité (34, 40) qui assure l'étanchéité hermétique de l'ensemble entonnoir (16) par rapport au compensateur (8).

8. Ensemble de transfert (2) selon l'une quelconque des revendications précédentes,
dans lequel le compensateur (8) est configuré pour compenser des tolérances d'alignement dans une plage de tolérance en direction de l'axe longitudinal (28) du compensateur (8) et/ou dans une direction orthogonale à celui-ci.

9. Système de transfert (100) pour le transfert aseptique d'un produit pharmaceutique, avec
- un isolateur (4),
- un récipient (6), et
- un ensemble de transfert (2) pour le transfert aseptique d'un produit pharmaceutique à partir de l'isolateur (4) dans le récipient (6), dans lequel l'ensemble de transfert (2) est réalisé selon l'une quelconque des revendications précédentes.

10. Utilisation d'un ensemble de transfert (2) selon l'une quelconque des revendications précédentes pour le transfert aseptique d'un produit pharmaceutique à partir d'un isolateur (4) dans un récipient (6).

11. Procédé (200) de transfert aseptique d'un produit pharmaceutique à partir d'un isolateur (4) dans un récipient (6) au moyen d'un ensemble de transfert (2) selon l'une quelconque des revendications précédentes, dans lequel le procédé (200) présente les étapes :
- de stérilisation (202) de l'ensemble entonnoir (16), notamment dans un autoclave,
- de nettoyage et/ou stérilisation (204) du récipient (6) et de l'élément de couplage (10) couplé à celui-ci,
- d'introduction (206) de l'ensemble entonnoir (16) dans un isolateur (4) et de mise en place de l'ensemble entonnoir (16) dans le compensateur (8),
- d'abaissement (208) de l'ensemble entonnoir (16) et de couplage (210) de la section de liaison (18) de l'ensemble entonnoir (16) à l'élément de couplage (10),
- d'amenée (212) du premier et du second moyen de fermeture (14, 20) dans la position d'ouverture (O1, O2) respective et de transfert d'un produit pharmaceutique à partir de l'isolateur (4) dans le récipient (6).

12. Procédé (200) selon la revendication 11,
dans lequel l'abaissement (208) de l'ensemble entonnoir (16) s'effectue manuellement et dans lequel le premier clapet (22) de l'élément de couplage (10) et le second clapet (24) de la section de liaison (18) de l'ensemble entonnoir (16) sont couplés par l'abaissement (208).

13. Procédé (200) selon la revendication 11 ou 12,
dans lequel le compensateur (8) est comprimé par l'abaissement (208) de l'ensemble entonnoir (16).

14. Procédé (200) selon l'une quelconque des revendications 11 à 13, dans lequel le nettoyage et/ou la stérilisation (204) du récipient (6) et de l'élément de couplage (10) couplé à celui-ci s'effectue au moyen d'un procédé en ligne, en particulier au moyen d'une stérilisation par nettoyage en place (NEP) ou stérilisation en place (SEP).

15. Procédé (200) selon l'une quelconque des revendications 11 à 14, avec les étapes supplémentaires :
- d'amenée (216) du premier et du second moyen de fermeture (14, 20) dans la position de fermeture (S1, S2) après l'amenée du produit pharmaceutique à partir de l'isolateur (4) dans le récipient (6),
- de découplage (218) de la section de liaison (18) de l'ensemble entonnoir (16) de l'élément de couplage (10).
